# EUROPÄISCHE PATENTSCHRIFT

(11) **EP 0 428 034 B1**
(45) Veröffentlichungstag und Bekanntmachung des Hinweises auf die Patenterteilung: **05.04.1995**
(21) Anmeldenummer: 90121119.3
(22) Anmeldetag: 05.11.1990
(51) Int. Cl.: G02C 13/00, C11D 3/00

(54) **Verfahren zum Reinigen einer Brille**
Method of cleaning spectacles
Méthode pour nettoyer des lunettes

(30) Priorität: 14.11.1989 DE 3937770
(43) Veröffentlichungstag der Anmeldung: 22.05.1991
(73) Patentinhaber: Müller, Rolf K., Dr., D-66021 Saarbrücken (DE)
(72) Erfinder: Müller, Rolf K., Dr., D-66021 Saarbrücken (DE)
(74) Vertreter: Bernhardt, Winfrid, Dr.-Ing.

(56) Entgegenhaltungen:
- EP-A- 0 334 060
- BE-A- 661 582
- CA-A- 737 893
- DE-A- 2 527 534
- DE-U- 8 533 115
- WORLD PATENTS INDEX LATEST Derwent Publications Ltd., London, GB; AN 88-351243 & JP A 63264518
- PATENT ABSTRACTS OF JAPAN (KATSUHIRO NAKADA) 8. Februar 1990 & JP A 2039021

## Beschreibung

Die Erfindung betrifft ein Verfahren zum Reinigen einer Brille.

Das übliche Verfahren, die Brille zu reinigen, ist Anhauchen und Putzen mit einem Tuch, ggf. einem speziellen Brillenputztuch.
Da das bei stark verschmutzten, ggf. zugleich bei Berufsarbeit Schutzfunktion erfüllenden, Brillen nicht ausreicht, sind nach verschiedensten Verfahren arbeitende Hilfsvorrichtungen entstanden:
Die DE-OS 28 40 607 und DE-OS 34 12 558 zeigen zangen- oder gabelförmige Vorrichtungen mit runden, gepolsterten Reinigungsbacken, die beidseitig auf das Brillenglas aufgesetzt und auf ihm bewegt werden.
In dem DE-GM 84 14 867 ist ein äußerlich einem Füllhalter ähnliches Instrument vorgeschlagen, das unter einer abnehmbaren Kappe eine rotierende Doppelbürste und Düsen zum Befeuchten der Doppelbürste mit Reinigungsflüssigkeit aufweist.

Auf ein ausgesprochen maschinelles Putzen von Brillengläsern ist die DE-OS 30 25 300 gerichtet.
Nach der DE-OS 30 02 717 wird die Brille in ein mit Reinigungsflüssigkeit gefülltes Gefäß gebracht, das ein drehendes Rührwerkzeug oder stattdessen eine gleichfalls die Flüssigkeit bewegende, brauseartige Blaseinrichtung für Luft aufweist. Die Reinigungsflüssigkeit soll aus Wasser hergestellt werden mittels einer aus einem festen Reinigungsmittel bestehenden Tablette.
Nach der DE-OS 33 10 490 wird die Brille in einem dafür eingerichteten Gefäß mit Reinigungsflüssigkeit besprüht.
Gegenstand der europäischen Veröffentlichungsschrift 0 231 455 ist ein nach Art eines Shakers zu schüttelndes Gefäß, in dem die Brille eingeklemmt ist und so mit Flüssigkeit bespült wird.
Etwa das Gleiche ist nach der US-PS 4 1 96 487 vorgesehen mit einem Zusatz von Kunststoffkörnern, die "schrubben" sollen.
Aus dem DE-GM 85 33 115 geht ein Behälter als bekannt hervor, in dem die Brille einfach mittels eines haushaltsüblichen Geschirrspülmittels in Ruhe gereinigt werden soll und zu diesem Zweck derart gehalten ist, daß die Brillengläser möglichst vollständig freiliegen.

Der Erfindung liegt die Aufgabe zugrunde, eine Brille ohne größere Mühe bedürfnisgerechter zu reinigen als nach diesem Stand der Technik.

Die Erfindung geht zu diesem Zweck aus von dem aus mehreren der vorgenannten Schriften bekannten, eingangs bezeichneten Verfahren und sieht vor, daß ein durch chemische Reaktion mit dem Wasser Sauerstoff abspaltendes Reinigungsmittel ("Aktivreiniger") verwendet wird.

Abweichend von den bekannten Techniken, bei denen Schweiß- und andere Schmutzablagerungen in den Gelenken der Brillenbügel und der Nasenaufsätze und in den Fugen zwischen den Brillengläsern und dem Gestell kaum entfernt werden, löst der Aktivreiniger den Schmutz bis in die engsten Fugen hinein, ob auch ablösend und/oder physikalisch lösend jedenfalls in der Weise, daß er den Schmutz zersetzt: Der Sauerstoff in statu nascendi spaltet und löst damit die von der Haut und auch aus dem Schweiß stammenden Fette, die der hartnäckigste Bestandteil der Verschmutzung sind. Die Brille kommt so in einen hygienisch einwandfreien Zustand. Dieses Bedürfnis ist bisher nicht genügend berücksichtigt worden.

Aktivreiniger sind bekannt zum Reinigen von Prothesen, vor allem von Zahnprothesen.

Mit Aktivreinigern für Zahnprothesen befassen sich beispielsweise die DE-PS 21 33 710, DE-PS 23 57 720, DE-OS 24 37 491, DE-OS 25 27 534, DE-PS 25 48 469, DE-PS 26 47 364, DE-PS 26 58 450, DE-PS 27 41 072, DE-PS 33 03 330, DE-OS 37 17 920 und DE-PS 38 12 693. Mit vergleichbaren Reinigern für Gehörprothesen, Haftschalen und deren Behältnissen befaßt sich die FR-PS 25 44 880.
Für Brillen mag die Anwendung eines Aktivreinigers angesichts des weiter oben angeführten Standes der Technik auf den ersten Blick übertrieben erscheinen; Brillen verlangen nicht die peinliche Sauberhaltung wie die in den Körper integrierten Prothesen.

Die Reinigungswirkung des Aktivreinigers ist nach der Erfindung aber eben nicht auf das Ergebnis strengster Sauberkeit gerichtet, das in den Fugen der Gelenke und der Glasfassungen der Brille auch gar nicht erreicht wird, sondern eben überhaupt auf eine wenigstens befriedigende Reinigung der Fugen. Daß dabei an den freiliegenden Flächen mehr als notwendig geschieht, stört nicht und wird in Kauf genommen.

Das erfindungsgemäße Reinigen hat den weiteren Vorteil, daß es ohne motorisch oder von Hand erzeugte Bewegung durchgeführt werden kann und damit einfach in einem offenen, stehenden oder hängenden Gefäß, während nach dem oben angeführten Stand der Technik durchweg geschlossene Gefäße vorgesehen sind.

Zur Durchführung wird man ein eigens auf die Bedürfnisse des Verfahrens ausgerichtetes Brillenreinigungsmittel in Form von Tabletten, Granulat oder Pulver zur Verfügung stellen.

Das Brillenreinigungsmittel wird entsprechend dem angegebenen Verfahren mindestens eine im Wasser einen schmutzlösenden Stoff abspaltende chemische Verbindung, vorzugsweise eine Sauerstoff oder Chlor abspaltende Verbindung, z.B. Natriumperboratmonohydrat, Natriumcarbonatperoxyhydrat, Kaliumpersulfat oder ein Salz der Caro'schen Säure bzw. Calziumhypochlorit enthalten.

Ferner sollte das Brillenreinigungsmittel eine im Wasser Kohlendioxid abgebende Verbindung enthalten, derart, daß ein Sprudeln eintritt, das zunächst für ein schnelles Auflösen des Aktivreinigers im Wasser sorgt und dann eine gewisse mechanische Reinigungswirkung ausübt. Vorteilhaft ist auch eine möglichst lang anhaltende Gasentwicklung, die nach dem Eindringen der Reinigungsflüssigkeit in die Fugen und Lösen des dortigen Schmutzes noch in den Fugen stattfindet und den gelösten Schmutz aus diesem heraustreibt.
In Betracht kommt z.B. Natriumhydrogenkarbonat.

Ein ferner hinzugegebenes Tensid, wie Dimethylpolysiloxan, kann Schaumbildung während des Sprudelns unterdrücken und die Reinigungswirkung dadurch verstärken, daß es ein Haften der Gasbläschen an der Brille verhindert oder verringert.

Um zu vermeiden, daß ein hartes Wasser beim Trocknen Kalkringe hinterläßt, kann man ein kalkbindendes Mittel zugeben, z.B. ein Natriumpolyphosphat.

Weiter in Betracht kommende Zusätze sind ein antibakterielles Mittel, z.B. Zitronensäure, ein Duftstoff, z.B. Pfefferminzaroma, und ein sauerstoffempfindlicher Farbstoff, der durch den entstehenden Sauerstoff gebleicht wird und damit ein sichtbares Maß für den Fortschritt auch der Reinigungsreaktion abgibt.

Die vorstehende Aufzählung ist selbstverständlich nicht abschließend. Weitere Substanzen wird man nach Bedarf zugeben, etwa den pH-Wert regelnde Mittel, wie Natriumcarbonat, und selbstverständlich Füllstoffe, Bindemittel, Gleitmittel, Auflockerungsmittel usw. zur Herstellung der Tabletten, des Granulats oder des Pulvers, wie Glukose, Talk, Stärke.

## Patentansprüche

1. Verfahren zum Reinigen einer Brille, bei dem die Brille in einem Gefäß mit Wasser behandelt wird, in dem sich ein Reinigungsmittel befindet,
dadurch gekennzeichnet,
daß ein durch chemische Reaktion mit dem Wasser Sauerstoff abspaltendes Reinigungsmittel verwendet wird.

2. Verfahren nach Anspruch 1,
dadurch gekennzeichnet,
daß ein Natriumperboratmonohydrat, Natriumcarbonatperoxyhydrat, Kaliumpersulfat oder ein Salz der Caro'schen Säure bzw. Calziumhypochlorit enthaltendes Reinigungsmittel verwendet wird.

3. Verfahren nach Anspruch 1 oder 2,
dadurch gekennzeichnet,
daß ein eine im Wasser Kohlendioxid abgebende Verbindung, vorzugsweise Natriumhydrogenkarbonat, enthaltendes Reinigungsmittel verwendet wird.

4. Verfahren nach einem der Ansprüche 1 bis 3,
dadurch gekennzeichnet,
daß ein ein antibakterielles Mittel, vorzugsweise Zitronensäure, enthaltendes Reinigungsmittel verwendet wird.

5. Verfahren nach einem der Ansprüche 1 bis 4,
dadurch gekennzeichnet,
daß ein ein Tensid, vorzugsweise Dimethylpolysiloxan, enthaltendes Reinigungsmittel verwendet wird.

6. Verfahren nach einem der Ansprüche 1 bis 5,
dadurch gekennzeichnet,
daß ein einen kalkbindenden Stoff, vorzugsweise ein Natriumpolyphosphat, enthaltendes Reinigungsmittel verwendet wird.

7. Verfahren nach einem der Ansprüche 1 bis 6,
dadurch gekennzeichnet,
daß ein einen sauerstoffempfindlichen Farbstoff enthaltendes Reinigungsmittel verwendet wird.

8. Verfahren nach einem der Ansprüche 1 bis 7,
dadurch gekennzeichnet,
daß ein einen Duftstoff, vorzugsweise Pfefferminzaroma, enthaltendes Reinigungsmittel vewendet wird.

9. Verfahren nach einem der Ansprüche 1 bis 8,
dadurch gekennzeichnet,
daß ein tabletten-, granulat- oder pulverförmiges Reinigungsmittel verwendet wird.

10. Verfahren nach einem der Ansprüche 1 bis 9,
dadurch gekennzeichnet,
daß das Reinigen ohne motorisch oder von Hand erzeugte Bewegung durchgeführt wird.

11. Verfahren nach Anspruch 10,
dadurch gekennzeichnet,
daß das Reinigen in einem offenen, stehenden oder hängenden Gefäß durchgeführt wird.

## Claims

1. Method of cleaning spectacles, in which the spectacles are treated with water in a vessel in which there is present a cleaning agent, characterized in that the cleaning agent used is one which releases oxygen by chemical reaction with the water.

2. Method according to Claim 1, characterized in that the cleaning agent used is one containing sodium perborate monohydrate, sodium carbonate peroxyhydrate, potassium persulphate or a salt of Caro's acid or calcium hypochlorite.

3. Method according to Claim 1 or 2, characterized in that the cleaning agent used is one containing a compound which gives off carbon dioxide in the water, preferably sodium hydrogen carbonate.

4. Method according to any one of Claims 1 to 3, characterized in that the cleaning agent used is one containing an antibacterial agent, preferably citric acid.

5. Method according to any one of Claims 1 to 4, characterized in that the cleaning agent used is one containing a surfactant, preferably dimethylpolysiloxane.

6. Method according to any one of Claims 1 to 5, characterized in that the cleaning agent used is one containing a calcium-binding material, preferably a sodium polyphosphate.

7. Method according to any one of Claims 1 to 6, characterized in that the cleaning agent used is one containing an oxygen-sensitive dye.

8. Method according to any one of Claims 1 to 7, characterized in that the cleaning agent used is one containing a fragrance, preferably peppermint aroma.

9. Method according to any one of Claims 1 to 8, characterized in that the cleaning agent used is one which is in tablet, granular or powder form.

10. Method according to any one of Claims 1 to 9, characterized in that the cleaning is carried out without motion generated by a motor or manually.

11. Method according to Claim 10, characterized in that the cleaning is carried out in an open, standing or hanging vessel.

## Revendications

1. Méthode pour nettoyer des lunettes lors de laquelle les lunettes sont traitées dans un récipient avec de l'eau dans laquelle se trouve un agent de nettoyage, caractérisée en ce qu'on utilise un agent de nettoyage libérant de l'oxygène par réaction chimique avec l'eau.

2. Méthode selon la revendication 1, caractérisée en ce qu'on utilise un agent de nettoyage contenant du perborate de sodium monohydraté, du peroxycarbonate de sodium hydraté, du persulfate de potassium ou un sel d'acide Caro ou de l'hypochlorite de calcium.

3. Méthode selon la revendication 1 ou 2, caractérisée en ce qu'on utilise un agent de nettoyage contenant un composé libérant du dioxyde de carbone dans l'eau, de préférence de l'hydrogénocarbonate de sodium.

4. Méthode selon une quelconque des revendications 1 à 3, caractérisée en ce qu'on utilise un agent de nettoyage contenant un agent bactéricide, de préférence de l'acide citrique.

5. Méthode selon une quelconque des revendications 1 à 4, caractérisée en ce qu'on utilise un agent de nettoyage contenant un agent tensioactif, de préférence du diméthylpolysiloxane.

6. Méthode selon une quelconque des revendications 1 à 5, caractérisée en ce qu'on utilise un agent de nettoyage contenant un agent fixant le calcaire, de préférence un polyphosphate de sodium.

7. Méthode selon une quelconque des revendications 1 à 6, caractérisée en ce qu'on utilise un agent de nettoyage contenant un colorant sensible à l'oxygène.

8. Méthode selon une quelconque des revendications 1 à 7, caractérisée en ce qu'on utilise un agent de nettoyage contenant une substance parfumée, de préférence de l'arôme de menthe poivrée.

9. Méthode selon une quelconque des revendications 1 à 8, caractérisée en ce qu'on utilise un agent de nettoyage sous forme de comprimés, de granules ou de poudre.

10. Méthode selon une quelconque des revendications 1 à 9, caractérisée en ce que le nettoyage peut être réalisé sans mouvement motorisé ni effectué à la main.

11. Méthode selon une quelconque des revendications 1 à 6, caractérisée en ce que le nettoyage est réalisé dans un récipient ouvert, posé sur une surface ou suspendu.
